# EUROPEAN PATENT APPLICATION

(11) **EP 4 692 581 A1**
(43) Date of publication of application: **11.02.2026**
(21) Application number: 24193546.9
(22) Date of filing: 08.08.2024
(51) Int. Cl.: F16D 1/10, F16D 1/112

(54) **COUPLING SYSTEM, FASTENING STRUCTURE AND VEHICLE**

(71) Applicant: AIRBUS Operations GmbH, 21129 Hamburg (DE)
(72) Inventor: Eschen, Henrik, 21129 Hamburg (DE)

(57) **Abstract**

In order to allow length tolerance compensation, the invention proposes a coupling system (30) for connecting a first component and a second component is provided. The coupling system comprises a longitudinal axis (L), a first part (31) for the first component, wherein the first part comprises first interlocking means (34) and a second part (32) for the second component, wherein the second part comprises second interlocking means (36). The first part and second part are slidably engageable along the longitudinal axis to provide length compensation. The first interlocking means comprises a plurality of first members (38) that are spaced apart in the direction of the longitudinal axis and the second interlocking means comprises a plurality of second members (42) that are spaced apart in the direction of the longitudinal axis. Upon relative rotational movement about the longitudinal axis the first members frictionally engage with the second members to couple the first part and the second part.

## Description

The invention relates to a coupling system, a fastening structure and a vehicle, for example an aircraft.

In addition to the passenger seats, aircraft cabins of passenger aircraft also comprise interior fixtures that are provided for use by the crew or by the passengers of the aircraft. Such interior fixtures include, for example, toilets, galleys, bar fixtures, supports for entertainment systems etc, and are referred to as monuments. Another type of interior fixture is an overhead storage bin, for example for storing luggage. Due to the restricted space available in aircraft cabins, such fixtures are often produced as preassembled or partially preassembled modules that are fastened to the interior of the aircraft, for example the aircraft frame, by an intermediate structure, e.g. a fastening structure.

US Patent No. 6,883,753 B1 discloses a monument support system for an aircraft that includes multiple aircraft frame elements. An adapter bridge is coupled to the aircraft frame elements and has multiple attachment points. A coupling member is coupled to the adapter bridge. The monument is coupled to the frame elements via the adapter bridge and the coupling member.

In order to attach an intermediate fastening structure, which is to support a further object such as an overhead storage bin, to the aircraft frame in a reliable fashion, it is desirable to be able to compensate for any variation in the position of the aircraft frame and/or intermediate structure.

According to the present application, a coupling system for connecting a first component and a second component is provided. The coupling system comprises a longitudinal axis, a first part for the first component and a second part for the second component. The first part comprises first interlocking means and the second part comprises second interlocking means. The first part and second part are slidably engageable along the longitudinal axis to provide length compensation. The first interlocking means comprises a plurality of first members that are spaced apart in the direction of the longitudinal axis and the second interlocking means comprises a plurality of second members that are spaced apart in the direction of the longitudinal axis. Upon relative rotational movement about the longitudinal axis, at least one of the first members frictionally engages with one of the second members to couple the first part and the second part.

Since a plurality of first members are provided that are spaced apart in the direction of the longitudinal axis and a plurality of second members are provided that are spaced apart in the direction of the longitudinal axis, at least one of the first members can engage with one of the second members at various overlaps along the longitudinal axis between the first and second parts. The frictional engagement of the first members of the first interlocking means of the first part and the second members of the second interlocking means of the second part of the coupling system set the length of the coupling system and, consequently, the overall length of the first and second components to which the first and second parts of the coupling system are attached.

The coupling system may be used for a module of an aircraft, such as a crown module. A crown module may comprise one or more overhead storage bins and further components such as electrical systems air conditioning, oxygen supply. The individual positioning and assembly of each system individually within the aircraft is complex and time consuming. Therefore, some or all of these parts are preassembled as a module which is then attached to the attachment structure of the aircraft by a fastening structure. This reduces the number of interfaces which have to be connected and fastened. Since a pre-assembled module includes a plurality of interfaces which have to be fastened to the attachment structure of the vehicle, e.g. aircraft, any variations in position from the ideal position may have to be compensated, for example if they are greater than a pre-determined tolerance. The coupling system described herein can be included on some or all of the interfaces of such a pre-assembled module in order to provide length compensation.

Preferably, the first part of the coupling system comprises a nose having an outer surface and the first member comprises a groove formed in the outer surface of the nose. The second part comprises a sleeve and the second member comprises a groove formed in the inner surface of the sleeve. The sleeve fits over the nose to provide slidable engagement of the first and second part relative to one another. The sleeve can also be called an outer sleeve as its slides over the nose. In order to provide length compensation, the nose is inserted into the sleeve along the longitudinal direction and rotational movement about the longitudinal axis of the outer sleeve relative to the nose causes at least one of the grooves formed in the inner surface of the sleeve to frictionally engage with one of the grooves formed in the outer surface of the nose, thus coupling the first and second parts of the coupling system together and setting the overall length.

Preferably, the first part has a substantially cylindrical nose having an outer surface and the first interlocking means is provided on a first arcuate section of the outer surface. The portion of the outer surface of the cylindrical nose which is adjacent to this arcuate section, is free of the first interlocking means. The second part comprises a substantially cylindrical sleeve having an inner surface and the second interlocking means is provided on a second arcuate section of the inner surface. The portion of the inner surface of the sleeve which is positioned adjacent the arcuate section, is free of the second interlocking means.

Preferably, the first member comprises an arcuate groove formed in the first arcuate section of the outer surface of the nose. Neighbouring ones of the grooves are spaced apart by an arcuate protrusion that extends radially from the outer surface. The second member comprises an arcuate groove formed in the second arcuate section of the internal surface of the substantially cylindrical sleeve. Neighbouring ones of the grooves are spaced apart by an arcuate protrusion that extends radially from the inner surface.

The first interlocking means comprises a plurality of arcuate grooves spaced apart in the direction of the longitudinal axis. The arcuate grooves extend circumferentially and parallel to one another and are formed in an arcuate section of the outer surface of the nose. Neighbouring ones of the grooves are spaced apart by an arcuate protrusion that extends radially from the outer surface. The second interlocking means comprises a plurality of arcuate grooves that are spaced apart in the direction of the longitudinal axis. The arcuate grooves extend circumferentially and parallel to one another and are formed in an arcuate section of the internal surface of the substantially cylindrical sleeve. Neighbouring ones of the grooves are spaced apart by an arcuate protrusion that extending radially from the inner surface.

The distance between an arcuate groove from the end of the first part or the end of the second part, respectively, is substantially the same along its length so that the groove does not form part of a spiral tread. The individual arcuate grooves of both the first part and the second part are concentrically arranged with respect to the longitudinal axis.

Radial (rotational) movement of the outer sleeve about the longitudinal axis relative to the nose causes the grooves of the first part to frictionally engage with the grooves of the second part so as to lock the two parts and set the length compensation. Radial movement of the outer sleeve about the longitudinal axis relative to the nose causes the protrusions of the first part to enter the grooves of the second part and the grooves of the first part to cover the protrusions of the second part to couple the first and second components.

Preferably, the protrusions of the first part have an external diameter which is less than an internal diameter of the second part at a position radially adjacent the arcuate section. This allows the nose to be received in the sleeve so that the first part can slide along the longitudinal axis into the second part, or so that he second part can slide along the longitudinal axis over the first part.

In an embodiment, the grooves of the first part are sized and shaped to provide a smooth transition between a point contact to a surface contact.

In an embodiment, the arcuate groove of the first interlocking means of the first part has a depth that increases circumferentially from one end to the opposing end of the arcuate groove and the arcuate groove of the second interlocking means of the second part has a depth that is circumferentially substantially uniform. This has the effect that a stop is provided, upon relative rotation between the nose and the outer sleeve, that prevents further rotation of the nose and outer sleeve relative to one another beyond the stop position.

In an embodiment, the arcuate protrusions of the first part have an external diameter which is less than an internal diameter of the second part at a position radially adjacent the second arcuate section so as to allow the nose to be slidably received in the outer sleeve.

In an embodiment, the first locking means further comprises a third arcuate section on its outer surface that is spaced apart from and opposes the first arcuate section. The third arcuate section comprises a plurality of arcuate grooves formed in the outer surface of the nose, wherein neighbouring ones of the grooves are spaced apart by an arcuate protrusion that extends radially from the outer surface. The second locking means further comprises a fourth arcuate section on its inner surface that is spaced apart from and opposes the second arcuate section. The fourth arcuate section comprises a plurality of arcuate grooves formed in the inner surface of the outer sleeve, wherein neighbouring ones of the grooves are spaced apart by an arcuate protrusion that extends radially from the inner surface. This arrangement increases the frictional engagement of the two parts of the coupling system. The outer sleeve is rotated about its axis to frictionally engage the first locking means of the nose with the second locking means of the outer sleeve.

In an embodiment, the arcuate portions between the third and fourth arcuate sections of the second part that are without grooves have a circumferential length that is greater than the circumferential length of the first and second arcuate sections of the first part. The arcuate protrusions of the first part have an external diameter which is less than an internal diameter of the second part at a position radially adjacent the second arcuate section This enables the nose to be slidably received in the outer sleeve.

In an embodiment, the first part of the coupling member further comprises a first guiding member and the second part of the coupling member further comprises a second guiding member, wherein the first guiding member engages the second guiding member to prevent relative rotational movement between the first and second components that are attached to the first and second part, respectively, of the coupling system about the longitudinal axis. The first guiding member may be attached to or integral with the first part and the second guiding member is attached to the second component and is separate from the outer sleeve. This enables the outer sleeve to be rotated about the longitudinal axis independently of the position of the first and second component.

Preferably, the first guiding member comprises a flat face and the second guiding member comprises a flat face.

In an embodiment, the first guiding member comprises a rod extending along the longitudinal axis and the rod comprises at least one flat face. The flat face extends along the length of the rod parallel to the longitudinal axis. The second guiding member comprises a bore, for example an elongate bore, having at least one flat face. The flat face extends along the length of the bore substantially parallel to the longitudinal axis. The rod can be inserted into the bore such that the flat face of the rod engages the flat face of the bore to prevent relative rotational movement between the first and second component about the longitudinal axis. The rod is attached to the second component and the sleeve is rotatably carried by a section of the rod. This section may be attached to the second component and in the interlocked position of the coupling system be spaced apart from the first part of the coupling system. The section may be enlarged end section having an outer diameter that fits inside a proximal end section of the outer sleeve.

In an embodiment, the coupling system further comprises a securing means for securing the position of the first and second parts relative to one another. The securing means may comprise a clip/pin or an integrated spring. The rod may comprise an enlarged end section having an outer diameter that fits inside a proximal end section of the outer sleeve. The end section of the sleeve and the enlarged section comprise one or more bores which in the locked position are aligned so that the pin can be inserted into the bores and secure the position of the sleeve to the rod and the position of the two parts with respect to each other in three drees of freedom.

A fastening structure for a crown module is also provided. The fastening structure is mountable on an attachment structure of an interior of a vehicle and comprises at least one coupling system of any one of the embodiments described herein. The first part is attached to the first component and the second part is attached to the second component.

In an embodiment, the first component is a node or an interface or a rod or a strut and the second component is a strut or a rod. The rod may be connected to an end of a strut and be positioned between the first part of the coupling system and the strut or between the second part of the coupling system and a strut.

In an embodiment, the fastening structure has a modular structure comprising a plurality of sections. The section may comprise an elongate body, first strut detachably coupled between the elongate body and a first fastening for fastening the first module to the attachment structure and second strut that is detachably coupled between the elongate body and the first fastening. The second strut extends at an inclined angle to the elongate body. The elongate body, first and second strut form a triangular shape.

In an embodiment, the first strut and/or the second strut are variably positionable with respect to the elongate body to provide tolerance compensation. The first strut and the second strut are lockable in an end position. The first strut is coupled between the elongate body at a first position and the second strut is coupled to the elongate body of the second position which is spaced apart from the first position. The first position may be a first end of the elongate body and the second position may be a second end of the elongate body that opposes the first end. The elongate body, together with the first and second struts may form a triangular shape. The elongate body may have the form of a tube which may have a circular cross-section. The elongate body and the first strut may be substantially coplanar. The second strut may be substantially coplanar with the elongate body and the first strut.

A vehicle is also provided which comprises a first attachment structure of an interior of the vehicle and the fastening structure of any one of the embodiments described herein. The fastening structure is fastened to the first attachment structure.

In an embodiment, the vehicle is an aircraft. In another embodiment, the vehicle is an aircraft and further comprises a second attachment structure. The first and second attachment structures are position able fuselage frames that are spaced apart along the longitudinal direction of the aircraft and/or stringers that extend along the longitudinal direction of the aircraft.

In an embodiment, the aircraft further comprises a crown module that is mounted on the first and second attachment structures by the fastening structure which includes at least one coupling system according to any one of the embodiments described herein.

The fastening structure is suitable for a monument and an overhead storage bin as well as a crown module. The fastening structure is mountable on an attachment structure of an interior of a vehicle and is used for attaching the monument, the overhead storage bin or crown module to the attachment structure of the interior of the vehicle.

The vehicle may be an aircraft, such as a passenger aircraft, or a rail vehicle or a road vehicle or a watercraft or a spacecraft. The attachment structure may comprise one or more fuselage frames which are spaced at intervals along the longitudinal direction of the aircraft. In the installed position, the fastening structure is positioned between the monument and the overhead storage bin compartment and the attachment structure.

Embodiments of the invention are described in more detail with reference to the accompanying schematic drawings that are listed below.

Fig. 1 depicts a view of an aircraft.

Fig. 2A depicts the attachment of a fastening structure to the frame of the aircraft.

Fig. 2B depicts a portion of the fastening structure and coupling systems that are located between two components of the fastening structure which are to be joined to one another.

Fig. 3A depicts an exploded view of the coupling system and Fig. 3B depicts the assembled first part and the assembled second part of the coupling system.

Fig. 4, which includes Figs 4A to 4F, depicts the assembly of the coupling system.

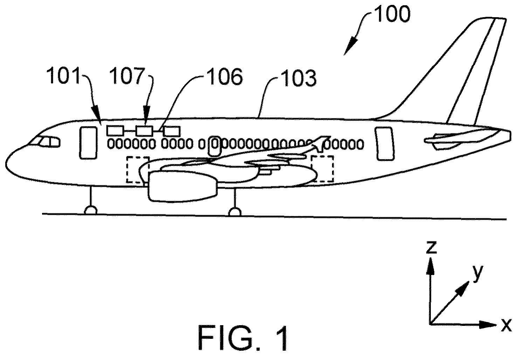

Fig. 1 depicts a schematic view of an aircraft 100 with an interior 101 which has an attachment structure 102 onto which one or more objects, e.g. modules 107 can be installed. Examples of a module 107 are a monument and an overhead storage bin, also known as an overhead luggage compartment, overhead locker or hat rack. A monument is a fixture that is provided for use by the crew or the passengers of the aircraft, such as toilets, galleys, bar fixtures etc, apart from overhead storage bins.

As illustrated with reference to Fig. 1, the longitudinal axis of the aircraft 100 is referred to as the x direction, the transverse axis as the y direction, which extends into the plane of the drawing, and the height as the z direction. Commonly, a plurality of modules 107, e.g. overhead storage bins, are arranged next one another in the vehicle 100, for example along the longitudinal axis of the vehicle, for example along the length of the fuselage 103 of the aircraft 100. A passenger aisle typically runs substantially parallel to the longitudinal axis and the row of modules.

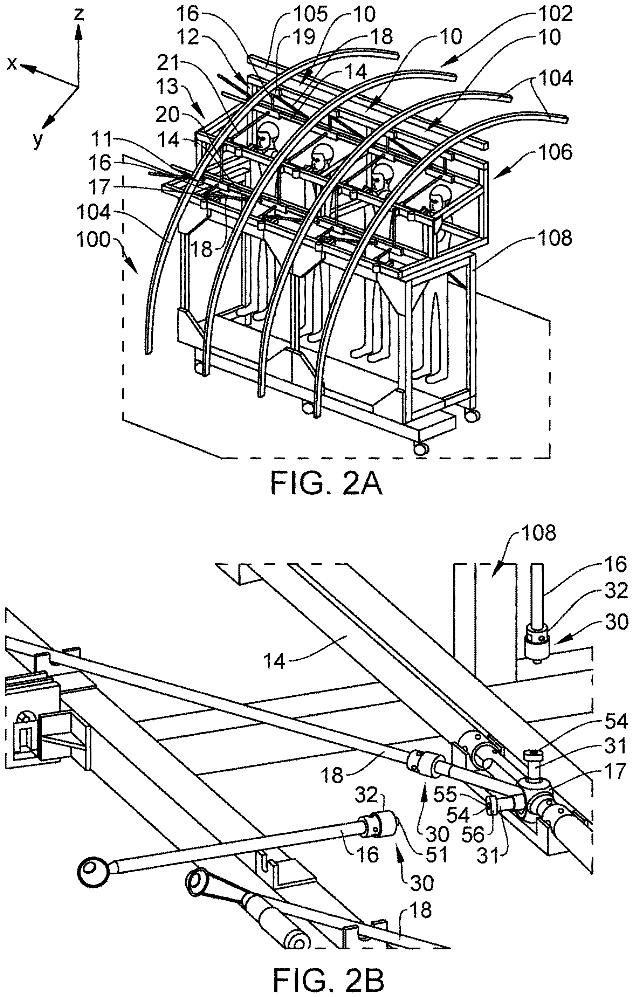

The modules 107 are fastened to the attachment structure 102 positioned at the interior 101 of the aircraft 100 by way of a fastening structure 106 which is depicted in figure 2A. In the description of the drawings, the fastening structure 106 will be described with reference to the aircraft 100. However, the fastening structure 106 can also be used to mount other types of components on the interior of other types of vehicles such as motor vehicles, including passenger motor vehicles, lorries and buses or other means of mass transportation such as trains or ships. The fastening structure 106 is not restricted to use with overhead luggage bins at any position above the floor but may also be used to install other types of interior components including monuments on the interior 101 of the aircraft 100. One fastening structure 106 may be used to fasten more than one module to the attachment structure 102 and includes a plurality of interfaces which are to be connected to the attachment structure 102.

Fig. 2A illustrates a schematic view of a portion of the interior 101 of the aircraft 100 and depicts the installation of the fastening structure 106 onto the attachment structure 102 of the aircraft 100. Fig. 2B illustrates a portion of the fastening structure 106 in a partially assembled state. The attachment structure 102 is formed on the interior of the fuselage 103 and comprises plurality of fuselage frames 104 which are spaced apart at intervals along the longitudinal axis of the aircraft 100 and encircle the fuselage 103. The attachment structure 102 further comprises a plurality of stringers 105 that are positioned on the outer surface of the fuselage frames 104 and which extend in the longitudinal direction of the fuselage 103 between the fuselage frames 104.

The fastening structure 106 has a modular structure had comprises a plurality of sections 10 which can be suitably arranged to allow the desired arrangement of overhead storage bins and monuments on the fastening structure 106 and on the interior 101 of the aircraft 100. The sections 10 of the fastening structure 106 are at least partially preassembled and supported on a jig 108 during installation on the attachment structure 102 of the aircraft 100. The sections 10 are arranged adjoining one another and connected to one another to form the fastening structure 106 along the longitudinal x direction of the aircraft.

Each section 10 comprises a first unit 11, a second unit 12 and a connection unit 13 positioned vertically between the first and second units 11, 12. The second unit 12 is positioned above the first unit 11 in the z direction. In some embodiments, each section 10 has a single unit, e.g. the first unit 11.

The first unit 11 and the second unit 12 each comprise an elongate body 14 on which the module, for example an overhead storage bin, will be fastened. The elongate body 14 may have a tubular or pipe form and may include one or more component fixtures 15 onto which the module may be installed.

The first unit 11 further includes a first strut 16 and a second strut 18. The first strut 16 is detachably coupled to the elongate body 14 and to a first fastening 17 and the second strut 18 is detachably coupled to the elongate body 14 and to the first fastening 17. The second strut 18 extends at an inclined angle with respect to the elongate body 14 from the elongate body 14 to the first fastening 17.

The unit 12 also includes a first strut 16 which is detachably coupled to the elongate body 14 and to a second fastening 19 and a second strut 18 which is detachably coupled to the elongate body 14 and the second fastening 19. The second strut 19 extends at an inclined angle with respect to the elongate body 14 from the elongate body 14 to the second fastening 19. The first and second struts 16, 18 may each be provided by a tube.

The elongate body 14, first strut 16 and second strut 18 of each unit 11, 12 form a triangular shape which is adjustable. The fastening structure 106 may be orientated with respect to the fuselage 103 such that the elongate body 14 of each of the units 11, 12 extends in the longitudinal (x) direction of the fuselage 103.

The connection unit 13 includes fifth and sixth struts 20, 21 and a third fastening 22. The fifth strut 20 extends is detachably coupled to the elongate body 14 of the first unit 11 and to the second fastening 19 and the sixth strut 21 is detachably coupled between the elongate body 14 of the second unit 12 and the third fastening 22 to connect the first and second units 11, 12 and form the section10.

In the mounted position illustrated in Fig. 2A, the first fastening 17 of the first unit 11 is engaged with a first fitting 24 in the fuselage frame 104, the second fastening 19 of the unit 12 is engaged with the second fitting 23 in the fuselage frame 104 and the third fastening 22 is engaged with a third fitting 25 on the same fuselage frame 104 to fasten the section 10 to the fuselage frame 104.

The fastenings 17, 19, 22 may comprise an elongate connector such as a bolt or screw and the corresponding fitting 23, 24, 25 may comprise an opening or bore, for example an opening in a clip or flange that is fixedly attached to the fuselage frame 104.

The fastening structure 106 comprises at least one mechanism for tolerance compensation, for example in order to ensure that the elongate body 14, on which the module 107 is to be attached, is located at the desired position. A coupling system 30, which is shown in Figs 2B, 3 and 4, can be used to adjust the effective length of one or both of the first and second struts 16, 18 within the fastening structure 106.

The invention provides a coupling system 30 which may be used for the connection of load bearing struts 16, 18, which may also be called rods. The coupling system 30 may be used, for example, for the installation of cabin systems, such as a crown module sub structure. The coupling system 30 may be used in a fastening structure 106 for such cabin systems, e.g. an overhead storage bin as depicted in Figs 1 and 2 which comprise a triangulated rod structure, as shown in Fig. 2 and formed by the struts 16, 18 and elongated body 14 connected by joints. The joints may be rotary joints with integrated tolerance compensation capability. The coupling system 30 described herein provides an interface concept with a tolerance compensation capability, in particular length compensation.

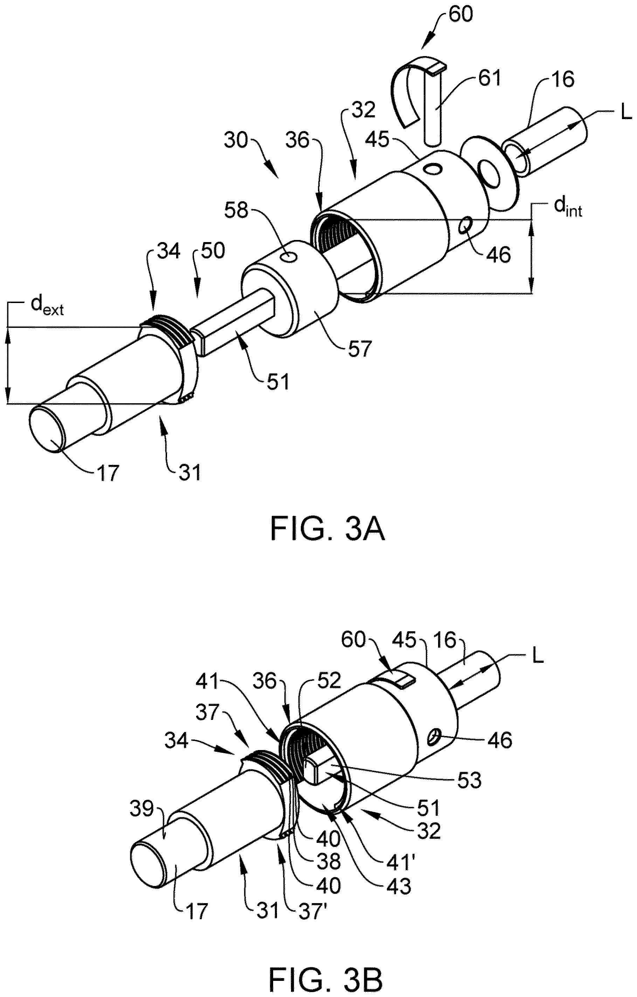

Referring to Figs 3A and 3B, the coupling system 30 comprises a first part or assembly 31 which is connected to a first component, for example a fitting 17 of the fastening structure 106, and a second part or assembly 32 which is attached to a second component, for example a strut 16, of the fastening structure 106. Fig. 3A depicts an exploded view of the coupling system 30 and Fig. 3B depicts the assembled first part 31 and the assembled second part 32 of the coupling system 30 before coupling, The first part 31 has the form of a substantially cylindrical nose and the second part 32 has the form of a substantially cylindrical outer sleeve for receiving the nose. The outer sleeve 32 and the nose 31 may be slidably engaged so as to provide adjustment of the length along the longitudinal axis L of the coupling system 30. This length adjustment is used in the fastening system 106 to provide length tolerance compensation. The longitudinal axis L corresponds to the longitudinal axis of the nose 31 and outer sleeve 32.

The first part 31 comprises a first interlocking means 34 and the second part 32 of the coupling system 30 comprises a second interlocking means 36. The first interlocking means 34 of the first part 31 is provided on the outer surface 39 of the nose and is provided in first and second arcuate sections 37, 37' of the outer surface, which are spaced apart from one another and oppose one another. The arcuate sections 37, 37' are arranged equidistantly around the circumference of the nose 31. In another embodiment, the first interlocking means 34 comprises a single arcuate section 37. More than two arcuate sections, for example three or four arcuate sections may also be provided.

Each of the arcuate sections 37, 37' includes a plurality of arcuate grooves 38 that extend circumferentially and which are spaced along the outer surface 39 of the first part 31 in the direction of the longitudinal axis L. The grooves 38 extend circumferentially around the outer surface 39 and substantially parallel to one another. The distance between one arcuate groove 38 from the end face of the first part 31 is substantially the same along its length so that the groove 38 does not form part of a spiral tread. The arcuate groove 38 is concentrically arranged with respect to the longitudinal axis L. The arcuate grooves 38 differ form a thread which has a pitch. Neighbouring ones of the grooves 38 are separated by a protrusion 40 which protrude outwardly from the outer surface 39 of the cylindrical nose of the first part 31. The first interlocking means 34 has an external diameter dₑₓₜ which is its maximum external diameter and which is measured between the tips of the protrusions 40 of the two opposing arcuate sections 37, 37'. The portion of the outer surface 39 positioned between the first and second arcuate sections 37, 37' is smooth and without grooves.

The second part 32 has the form of a cylindrical outer sleeve. The second interlocking means 36 comprises third and fourth arcuate sections 41, 41' formed in the inner surface 43 of the outer sleeve 32. Each arcuate section 41, 41' comprising a plurality of grooves 42 formed in the inner surface 43 of the outer sleeve 32. The arcuate sections 41, 41' are equidistantly spaced around the inner surface 43. The grooves 42 extend circumferentially along the inner surface 43 and are spaced apart along the direction of the longitudinal axis L such that a protrusion 44 is formed between two adjoining grooves 42. The grooves 42 extend circumferentially around the inner surface 43 and substantially parallel to one another. The distance between an arcuate groove 43 from the end of the outer sleeve 33 is substantially the same along its length so that the groove 42 does not form part of a spiral tread. The arcuate groove 42 is concentrically arranged with respect to the longitudinal axis L and differs from a thread having a pitch.

The regions of the inner surface 43 between the arcuate sections 41, 41' of the grooves 42 are free of grooves. The groove free sections have internal diameter dᵢₙₜ which is slightly greater than the external diameter dₑₓₜ of the widest section of the first part 31. This enables the outer sleeve 32 to be slidably inserted over the nose 31. This slidable arrangement between the first and second parts 31, 32 along the longitudinal axis L provides adjustment of the end-to-end length of the two components that are attached two the first part 31 and second part 32 of the coupling system, respectively, and length tolerance compensation.

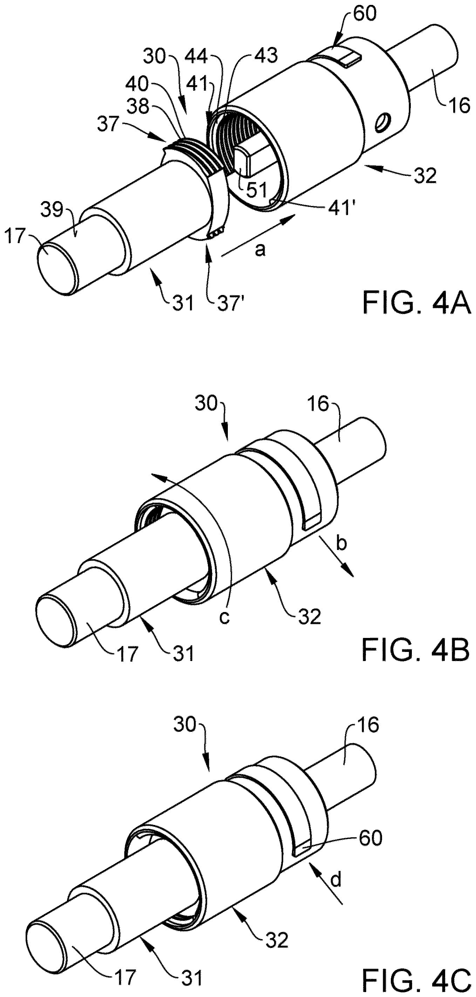

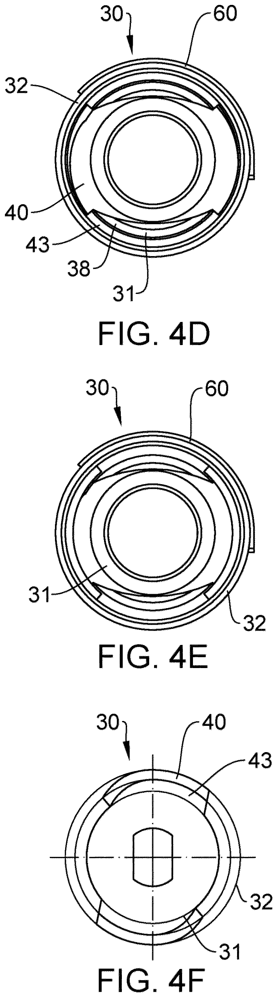

Use of the coupling system will be described with reference to Fig. 4. The first part 31 may be attached to a joint or fitting 17 of the fastening structure and the second part may be attached to a strut 16. Referring to Fig. 4A, the strut 16, that is attached to the second part 32, is attached to the second fastening 17, e.g. a central node, by pushing the sleeve 32 attached to the stut 16 over the nose 31 attached to the second fastening 17 in the direction of arrow a. Referring to Fig. 4B, the overlap of the nose 31 and sleeve and therefore the length of the coupling system 30 is adjusted. Referring to Fig. 4C, the sleeve 32 is rotated about the longitudinal axis L in the direction of arrow c such that the grooves 42 on the inner surface 43 of the sleeve 32 frictionally engage with the grooves 38 on the outer surface 39 of the nose 31 thus engaging the first and second interlocking means 34, 36 and setting the length of the assembly.

Since first interlocking means 34 comprises a plurality of grooves 38 spaced along the longitudinal axis L and the second interlocking means 36 also comprises a plurality of grooves 43 spaced along the longitudinal axis, at different overlapping lengths of the two parts 31, 32 at least one or more than one groove of the grooves 42 of the outer sleeve 32 may be frictionally engaged with at least one of the grooves 38 on the outer surface 39 of the nose 31 so as to set the length of the coupling system 30, thus compensating of an variation in length, couple the first and second parts 31, 32 to one another and attach the strut 16 to the fastening 17.

In some embodiments, the coupling system 30 also comprises a guiding system 50 which prevents movement of the two components attached to the parts 31, 32 in other directions other than the length direction. In an embodiment, the guiding system 50 comprises a first guiding means in the form of a bore 54 and a second guiding means in the form of a rod 51.

The second part 32 of the coupling system 30 comprises the rod 51 which is substantially cylindrical but which has two opposing flat faces 52, 53. The rod 51 is located along the longitudinal axis within the second part 32. The sleeve 32 of the second part is rotationally carried by the rod 51 so that the rod 51 can protrude from the sleeve 32 and provide the first mechanical engagement with the nose 31.

The first part 31 of the coupling system includes the bore 54 which is arranged centrally along the longitudinal axis L and which is elongated. The bore 54 also has two opposing side faces 55, 56 and is sized and shaped to receive the rod 51 of the second part 32. The rod 51 and bore 54 provide the guiding system 50 and engagement of the flat faces 52, 53 of the rod 51 with the flat faces 55, 56 of the bore 54 prevents relative movement between the two in other directions, e.g. linear movement in direction perpendicular to the longitudinal axis L.

Referring to Fig. 4, to attach the strut 16 and fastening 19 to one another by way of the coupling system 30, the rod 51 of the second part 32 is inserted into the bore 54 of the first part 31, the two flat faces 52, 53 of the rod 51 engage with the flat faces 55, 56 of the bore 54 so that rotational movement of the rod 51 and bore 54 and consequently, the first and second parts 31, 32 including the strut 16 attached to the second part 32 about the longitudinal axis L is prevented. Consequently, when assembling the coupling system 30, the only dimension which can be adjusted by the slidable movement between the outer sleeve 32 and nose 31 is length. After the rod 51 engages the bore 54, the sleeve 32 is slid over the nose 31. When the length has been adjusted by sliding the nose 31 into the outer sleeve 32, the length is set by engaging the first and second interlocking means 34, 36 of the nose 31 and sleeve 32, respectively, by rotating the outer sleeve 32 around the longitudinal axis, as depicted in Fig. 4B

Referring to Figs 3 and 4, the coupling system 30 also comprises a securing means 60 for providing additional securing of the position of the two parts 31, 32, in the interlocked position. The rod 51 providing the first guiding means extends along the longitudinal axis L of the sleeve 32 and comprises a substantially cylindrical section 57 with an enlarged outer diameter which carries with an end section 45 of the outer sleeve 32. The enlarged distal end section 57 of the rod 51 comprises a plurality of bores 58. The outer sleeve 32 is rotationally retained on the distal end section 57. The end section 45 of the outer sleeve 32 also comprises a plurality of bores 46. In the interlocked position, at least one of the bores 58 of the distal end section 57 of the rod 51 aligns with one of plurality of bores 45 of the of the end section 46 of the sleeve 32. A pin, e.g. a pin/ clip 61 is inserted into the aligned bores 58, 45, as shown by the arrow b, to secure the position of the coupling system 30 in the rotated interlocked position, as depicted in Fig. 4C.

Referring to Figs 3A, 3B, 4A and 4D to 4F, the protrusions 40 and grooves 38 of the first interlocking means 34 comprise am external diameter dₑₓₜ which increases in a circumferential direction from one end to the other end of the groove 40 and, therefore, from one end to the other end of the arcuate section 37. Fig. 4A depicts the form of the grooves 38. Fig. 4D illustrates a plan view of the grooves 38 of the nose 31 and grooves 42 of the sleeve 42 in the unlocked position and Fig. 4E in the locked position, i.e. after rotation of the sleeve 32 with respect to the nose 31. The depth of the grooves 42 in the inner surface 43 of the sleeve 32 have a uniform depth such that rotation of the sleeve 32 which causes the grooves 42 of the outer sleeve 32 to frictionally engage with the grooves 38 of the first nose 31 and the increase in depth of the groove 38 in the circumferential direction provides a stop. Thus, the maximum degree of rotation of the outer sleeve 32 with respect to the nose 31 is set, for example at 90°.

The integration of tolerance compensation and locking of interfaces within a large system of rods and rotary joints (e.g. Crown Module) is provided by the use of the coupling system 30 described herein. The coupling system 30 provides a form fit solution that is robust. The coupling system 30 may also reliably prevent blocking during the locking process. The specifically designed curvature of the grooves of the first interlocking means 34 reliably prevents blocking of the interfaces, i.e. the interfaces between the grooves 38, 42 during the locking since the contact between the two parts 31, 32, i.e. the grove 38, 42 smoothly transitions from point contact to surface contact. The installation time is reduced by eliminating the need of manual adjustment of multiple interfaces and by provided a single degree of freedom locking motion without the risk of blocking. Additionally, the coupling system 30 enables fast manual or automated preassembly of a structure of rods, e.g. a crown module, reducing preassembly times and costs. Due to the optimized locking movement, the coupling system 30 assists in improving accessibility and ergonomics in application like the crown module installation.

To summarise, a coupling system is provided that has two parts, which may also be called assemblies. One part may be preinstalled on a first component, e.g. a strut, which may also be called a rod, and the other part is preinstalled on the component to which the rod should be connected. This other component may be another rod or strut. A linear guide system 50 enables alignment and preassembly of the two parts 31, 32 and reduces the degrees of freedom to the one needed for length compensation. After tolerance compensation, the interface is locked by turning of a locking sleeve 32. A tool may be used for assistance. The locking is achieved by interlocking grooves 38, 42, similar to a thread without pitch. A specifically designed curvature of the grooves 38 in the inner part 31 prevents blocking of the two parts 31, 32 during turning of the locking sleeve 32 since the contact between the two parts 31, 32 smoothly transitions from point contact to surface contact. The locking sleeve 32 can be secured against loosening by e.g. a clip/ pin 61 or an integrated spring. Uses of the mechanism of the coupling system 30 include alignment of two rods during assembly with one degree of freedom, length compensation of rods for tolerance compensation and locking of interface after tolerance compensation.

### List of reference signs:

- 10: section
- 11: first unit
- 12: second unit
- 13: connection unit
- 14: elongate body
- 15: component fixture
- 16: first strut
- 17: first fastening
- 18: second strut
- 19: second fastening
- 20: fifth strut
- 21: sixth strut
- 22: third fastening
- 23: second fitting
- 24: first fitting
- 25: third fitting

- 30: coupling system
- 31: first part
- 32: second part
- 34: first interlocking means
- 36: second interlocking means
- 37: first arcuate section
- 37': second arcuate section
- 38: groove
- 39: outer surface
- 40: protrusion
- 41: third arcuate section
- 41': fourth arcuate section
- 42: groove
- 43: inner surface
- 44: protrusion
- 45: end portion
- 46: bore

- 50: guiding system
- 51: rod
- 52: flat face
- 53: flat face
- 54: bore
- 55: flat face
- 56: flat face
- 57: enlarged section
- 58: bore

- 60: securing system
- 61: pin/clip

- 100: aircraft
- 101: interior
- 102: attachment structure
- 103: fuselage
- 104: fuselage frame
- 105: stringer
- 106: fastening structure
- 107: module

## Claims

1. Coupling system (30) for connecting and first component and a second component, the coupling system (30) comprising:
a longitudinal axis (L);
a first part (31) for the first component, wherein the first part (31) comprises first interlocking means (34);
a second part (32) for the second component, wherein the second part (32) comprises second interlocking means (36);
wherein the first part (31) and second part (32) are slidably engageable along the longitudinal axis (L) to provide length compensation,
wherein the first interlocking means (34) comprises a plurality of first members (38) that are spaced apart in the direction of the longitudinal axis (L) and the second interlocking means (36) comprises a plurality of second members (42) that are spaced apart in the direction of the longitudinal axis (L),
wherein upon relative rotational movement about the longitudinal axis (L) the first members (38) frictionally engage with the second members (42) to couple the first part (31) and the second part (32).

2. A coupling system (30) according to claim 1, wherein the first part (31) has a substantially cylindrical nose having an outer surface (39) and the first interlocking means (34) is provided on a first arcuate section (37) of the outer surface (39) and the second part ((32) comprises a substantially cylindrical sleeve having an inner surface (43) and the second interlocking means (36) is provided on a second arcuate section (41) of the inner surface (43).

3. A coupling system (30) according to claim 2,
wherein the first member (38) comprises an arcuate groove formed in the first arcuate section (37) of the outer surface (39) of the nose (31), wherein neighbouring ones of the grooves (38) are spaced apart by an arcuate protrusion (40) that extends radially from the outer surface (39), and
wherein the second member (32) comprises an arcuate groove (42) formed in the second arcuate section of the internal surface (43) of the substantially cylindrical sleeve (32), wherein neighbouring ones of the grooves (42) are spaced apart by an arcuate protrusion (44) that extends radially from the inner surface (43).

4. A coupling system (30) according to claim 3, wherein radial movement of the outer sleeve (32) about the longitudinal axis (L) relative to the nose (31) causes the grooves (38) of the nose (31) to frictionally engage with the grooves (42) of the outer sleeve (32).

5. A coupling system (30) according to claim 4, wherein radial movement of the outer sleeve (32) about the longitudinal axis relative to the nose (31) causes the protrusions (40) of the nose (31) to enter the grooves (42) of the outer sleeve (32) and the grooves (38) of the nose (31) to cover the protrusions (44) of the outer sleeve (32).

6. A coupling system (30) according to any one of claims 3 to 5, wherein the arcuate groove (38) of the first part (31) has a depth that increases circumferentially from one end to the opposing end of the arcuate groove (38) and the arcuate groove (2) of the second part (32) has a depth that is circumferentially substantially uniform so that upon relative rotation between the first part (31) and the second part (32) a stop is provided.

7. A coupling system (30) according to any one of claims 3 to 6, wherein the arcuate protrusions (40) of the first part (31) have an external diameter which is less than an internal diameter of the second part (32) at a position radially adjacent the second arcuate section (41) so as to allow the first part (31) to be slidably received in the second part (32).

8. A coupling system (8) according to any one of claims 3 to 7, wherein the first locking means (34) further comprises a third arcuate section (37') on the outer surface (39) of the nose (31) that is spaced apart from and opposes the first arcuate section (37), wherein the third arcuate section (37') comprises a plurality of arcuate grooves (38) formed in the outer surface (39) of the nose (31), wherein neighbouring ones of the grooves (38) are spaced apart by an arcuate protrusion (40) that extends radially from the outer surface (39), and
wherein the second locking means (36) further comprises a fourth arcuate section (41') on its inner surface (43) that is spaced apart from and opposes the second arcuate section (41), wherein the fourth arcuate section (41') comprises a plurality of arcuate grooves (42) formed in the inner surface (43) of the outer sleeve (32), wherein neighbouring ones of the grooves (42) are spaced apart by an arcuate protrusion (44) that extends radially from the inner surface (43).

9. A coupling system (30) according to any one of claims 1 to 8, wherein the first part further comprises a first guiding member (51) and the second part further comprises a second guiding member (54), wherein the first guiding member (51) engages the second guiding member (54) to prevent relative rotational movement between the first and second part (31, 32) about the longitudinal axis (L).

10. A coupling system (30) according to claim 9, wherein the first guiding member (51) comprises at least one flat face (52, 53) and the second guiding member (54) comprises at least one flat face (55, 56).

11. A coupling system (30) according to claim 10, wherein the first guiding member (51) comprises a rod extending along the longitudinal axis (L), wherein the rod comprising the at least one flat face (52, 53) and the second guiding member (54) comprises a bore having the at least one flat face (55, 56), wherein the flat faces (52, 53) of the rod (51) engages the respective flat face (55, 56) of the bore (54).

12. A coupling system (30) according to any one of claims 1 to 11, further comprising securing means (60) for securing the position of the first and second parts (31, 32) relative to one another.

13. A fastening structure (106) for a module, the fastening structure (106) being mountable on an attachment structure (102) of an interior (101) of a vehicle (100), wherein the fastening structure (106) comprises the coupling system (30) of any one of claims 1 to 10, wherein the first part (31) is attached to the first component (17) and the second part (32) is attached to the second component (16).

14. A fastening structure (106) according to claim 13, wherein the first component (17) is a node or an interface or a strut or a road and the second component (16) is a rod or a strut.

15. A vehicle (100), comprising:
a first attachment structure (104) of an interior of the vehicle (100);
the fastening structure (106) of claim 14;
wherein the fastening structure (106) is fastened to the first attachment structure (104).
